# DEMANDE DE BREVET EUROPEEN

(11) **EP 2 482 601 A1**
(43) Date de publication de la demande: **01.08.2012**
(21) Numéro de dépôt: 11305083.5
(22) Date de dépôt: 27.01.2011
(51) Int. Cl.: H04W 72/04, H04W 52/02, H04W 88/06

(54) **Procédé de communication bidirectionnelle au sein d'un réseau radio de type domotique.**

(71) Demandeur: HAGER CONTROLS, 67700 Saverne (FR)
(72) Inventeur: Robin, Serge, 67700, Landersheim (FR); Magneron, Philippe, 67370, Truchtersheim (FR); Fricker, Philippe, 67330, Bouxwiller (FR)
(74) Mandataire: Littolff, Denis

(57) **Abrégé**

Procédé de communication bidirectionnelle au sein d'un réseau radio de type domotique reliant une pluralité d'équipements communiquant en deux modes distincts, un premier mode dit rapide impliquant une communication réalisée sans qu'il y ait perception humaine d'un décalage entre une commande et sa réalisation si elle s'accompagne d'un effet perceptible et un second mode dit lent pour lequel ladite perception n'est pas un enjeu.

Ce procédé est caractérisé en ce qu'il est basé sur plusieurs canaux de fréquences de communications distinctes, comportant au moins un canal de fréquence prédéterminée pour les communications entre équipements fonctionnant en mode rapide, au moins un canal de fréquence prédéterminée pour les communications entre équipements fonctionnant en mode lent, au moins un canal de fréquences commun aux équipements fonctionnant en mode lent et aux équipements fonctionnant en mode rapide.

## Description

La présente invention concerne un procédé de communication bidirectionnelle établi au sein d'un réseau radio de type domotique reliant une pluralité d'équipements réalisant des fonctions très diverses. Un tel réseau permet typiquement la commande et le contrôle d'un certain nombre d'équipements prenant place par exemple dans une maison d'habitation, notamment des dispositifs d'éclairage, de chauffage, des systèmes d'alarme, des applications de comptage d'énergie, etc...

Parmi ces équipements, certains communiquent en mode dit rapide, c'est-à-dire impliquant une communication qui doit être mise en oeuvre sans qu'il y ait de perception physiologique d'un décalage entre la commande et sa réalisation, dans la mesure évidemment où cette dernière s'accompagne d'un effet qui soit perceptible à l'usager. D'autres communiquent en mode dit lent, dans lequel une telle perception d'immédiateté n'est pas un enjeu, les envois de données étant par conséquent gérés sans contraintes de temps particulières.

En d'autres termes, les équipements pour lesquels une action sans délai est attendue, du point de vue de l'utilisateur, fonctionnent en mode rapide, alors que les équipements pour lesquels la commande peut être transmise par le réseau sans qu'il y ait d'urgence particulière sont considérés comme des équipements fonctionnant en mode lent. Le mode rapide s'adresse typiquement à des applications de type éclairage, alarme technique, commande d'ouvrants, équipements dans lesquels une restitution d'information sous forme d'un événement visuel ou auditif est exigée au moins au début de l'action, inconsciemment ou non, par l'utilisateur.

Le mode lent est plutôt dévolu au pilotage de systèmes intégrés au bâtiment et pour lequel un « accusé de réception » perceptible par les sens de l'être humain n'est pas requis. Il peut s'agir d'une demande d'informations d'état d'un équipement, ou de systèmes de mise en oeuvre d'opérations visant à activer des moyens de chauffage, de comptage, des alarmes non techniques, etc.

En amont, la réflexion rejoint souvent une problématique liée aux alimentations de ces différents équipements. En général, dans le domaine de la domotique, les équipements qui fonctionnent en mode rapide sont alimentés par le secteur, alors que ceux qui sont gérés en mode lent fonctionnent avec des batteries ou piles. Dans ce dernier cas, les dispositifs fonctionnent, du point de vue de la communication, de manière unidirectionnelle pour limiter la dépense d'énergie et éviter d'avoir à changer trop souvent les sources d'énergie.

Les échanges bidirectionnels nécessitent en effet un type de fonctionnement permanent ou quasi permanent qui n'est énergétiquement guère compatible avec l'usage de piles ou batteries, notamment celles qui sont utilisées en domotique, qui sont en général de petites dimensions.

Pour palier les insuffisances liées à ces alimentations, et permettre une mise en place a minima d'une communication sous forme d'échanges bidirectionnels ne conduisant pas à décharger trop rapidement la batterie ou la pile, une solution a consisté à ne mettre les produits en réception que pendant de très petites périodes de temps. Ce qui suppose cependant que les signaux qu'on leur transmet soient suffisamment longs pour qu'il y ait des correspondances avec des périodes « d'écoute » ou de « réveil » des récepteurs.

Ainsi, à titre d'exemple, les périodes de réveil communément admises dans les systèmes existants utilisant cette solution vont de 1 à quelques millisecondes, et elles se produisent toutes les 500 millisecondes à 1 seconde. Cela conduit à des temps de réaction des équipements sur les réseaux qui sont supérieurs à la durée qu'un être humain n'est pas capable de percevoir entre une commande et son exécution.

On considère que ce « temps physiologique » est de l'ordre de 200 millisecondes. Or, dans l'hypothèse précédente, si une commande gère par exemple un éclairage, la trame radio transmise doit être de 500 millisecondes à 1 seconde pour être sûre de tomber sur une période d'écoute du récepteur et que l'action requise puisse être exécutée correctement.

Dans l'exemple de l'allumage de la lumière, un tel délai n'est pas admissible dans les usages commerciaux actuels car considéré comme non satisfaisant par les clients.

Pour d'autres applications telles que la mise en route d'un chauffage ou d'une alarme non technique, ce type de délai est en revanche parfaitement admissible, l'important étant que l'ordre soit transmis, la rapidité de la transmission n'étant pas un critère en l'espèce.

Dans un réseau domotique ouvert, différentes applications induisant des temps de réaction très divers doivent pouvoir coexister. Ainsi, malgré les contraintes d'alimentation que l'on peut considérer comme négatives, il est néanmoins souhaitable de conserver les récepteurs ou équipements qui sont alimentés par piles ou batteries, cellules solaires, piézoélectricité, effet Peltier ou tout autre dispositif de récupération d'énergie, car ils sont faciles à installer et présentent une grande souplesse d'utilisation.

Cependant, si le fonctionnement s'effectue avec une unique fréquence d'utilisation, comme c'est le cas dans les systèmes radio domotiques actuels, la mise en place simultanée sur le réseau d'applications ou d'équipements utilisant le mode lent et d'autres utilisant le mode rapide suscite des problèmes, ces derniers ne pouvant par exemple pas être mis en oeuvre dès lors qu'une communication en mode lent est déjà en cours. Or, il résulte de leur mode de fonctionnant que leur mise en route est prioritaire par rapport à celle des récepteurs fonctionnant en mode lent.

Par ailleurs, l'utilisation d'une même fréquence radio peut conduire à des réveils intempestifs d'équipements fonctionnant en mode lent lors de la transmission d'informations en mode rapide, ce qui conduit à épuiser trop rapidement les batteries ou, plus généralement, la source d'énergie qui les équipe, dégradant encore la durée de fonctionnement des récepteurs utilisés en mode lent.

L'invention remédie à ces insuffisances, et propose une organisation originale du système radio jouant à la fois sur les fréquences et sur les débits des données transmises pour les fonctionnements respectivement en modes rapide et lent.

A cet effet, le procédé de l'invention, concernant comme mentionné auparavant la communication bidirectionnelle au sein d'un réseau radio de type domotique reliant une pluralité d'équipements communiquant en deux modes distincts, un premier mode dit rapide impliquant une communication réalisée sans qu'il y ait perception humaine d'un décalage entre une commande et sa réalisation si elle s'accompagne d'un effet perceptible et un second mode dit lent pour lequel ladite perception n'est pas un enjeu, se caractérise à titre essentiel en ce qu'il est basé sur plusieurs canaux de fréquences de communications distinctes, comportant au moins un canal de fréquence prédéterminée pour les communications entre équipements fonctionnant en mode rapide, au moins un canal de fréquence prédéterminée pour les communications entre équipements fonctionnant en mode lent, au moins un canal de fréquences commun aux équipements fonctionnant en mode lent et aux équipements fonctionnant en mode rapide.

En d'autres termes, selon l'invention, des fréquences radio peuvent être attribuées pour chaque mode de fonctionnement, et au mois une fréquence particulière dite canal de préférence peut être mise en place pour que tous les équipements connectés au réseau soient capables de communiquer lors de certaines occurrences, par exemple au moment de leur configuration.

Compte tenu de la typologie de fonctionnement des équipements utilisés en mode rapide, l'usage de plusieurs canaux de fréquences radio est nécessaire, de manière à éviter les interférences de fonctionnement.

Par ailleurs, dans ce système à canaux de fréquence communs, il est prévu selon l'invention que dans chaque canal de fréquences commun, le codage des données est identique en mode rapide et en mode lent, les débits étant différents pour les deux modes.

Cela évite les inconvénients mentionnés ci-dessus car, dans une telle hypothèse, si un récepteur fonctionnant en principe en mode lent se réveille lors de la détection d'une transmission radio, s'il détecte un débit rapide, il peut à nouveau et immédiatement être mis en veille sans dépense d'énergie inconsidérée. Une seule période du signal suffit à cet effet.

De préférence encore, selon l'invention, au moins un canal de fréquence commun est réservé aux équipements fonctionnant en mode rapide communiquant avec des équipements fonctionnant en mode lent et, parallèlement, au moins un canal de fréquence commun est réservé aux équipements fonctionnant en mode lent communiquant avec des équipements fonctionnant en mode rapide.

L'invention va à présent être décrite plus en détail, en référence aux figures annexées, pour lesquelles :
- la figure 1 représente un diagramme de type synoptique fonctionnel illustrant le type de fonctionnement mis en oeuvre par le procédé de l'invention ;
- la figure 2 éclaire le fonctionnement du procédé sur la base d'un signal reçu par un équipement fonctionnant en mode lent, en présence d'une transmission en mode lent ; et
- la figure 3 illustre la réception par un équipement fonctionnant en mode lent d'une transmission en mode rapide, et sa réaction.

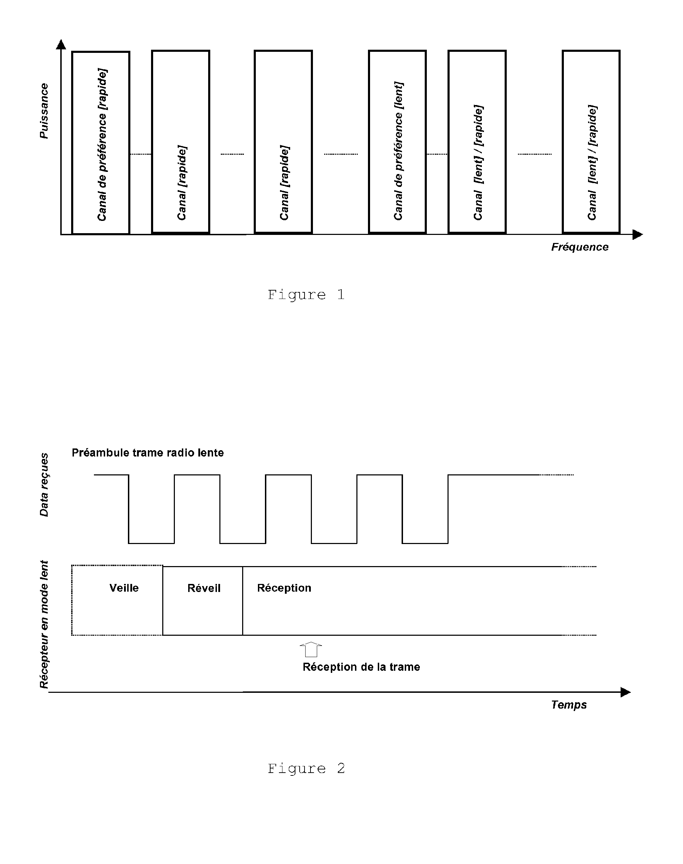

En référence à la figure 1, le diagramme montre les différents canaux de fréquence utilisés à l'appui du procédé de l'invention, illustrant clairement l'existence de fréquences distinctes selon les équipements connectés au réseau.

Ainsi, dans la figure 1, deux canaux sont attribués plus spécifiquement à un mode de fonctionnement rapide, et deux autres à un mode de fonctionnement lent, sachant que ces canaux sont également utilisables en fonctionnement rapide.

Enfin, des canaux de préférence respectivement rapide et lent permettant à tous les équipements de communiquer sont également prévus, comme l'option en a été laissée ouverte auparavant.

La figure 2 explique le fonctionnement du système selon le procédé de l'invention lorsqu'un signal correspondant à un canal de fréquence commun fonctionnant en mode lent est reçu par un récepteur fonctionnant lui-même en mode lent. Dans ce cas, la trame du signal radio apparaissant dans la partie supérieure de la figure 2 est présente lorsque le récepteur se réveille, cette phase de réveil étant ensuite transformée en une phase de réception des données, permettant finalement la commande dudit récepteur.

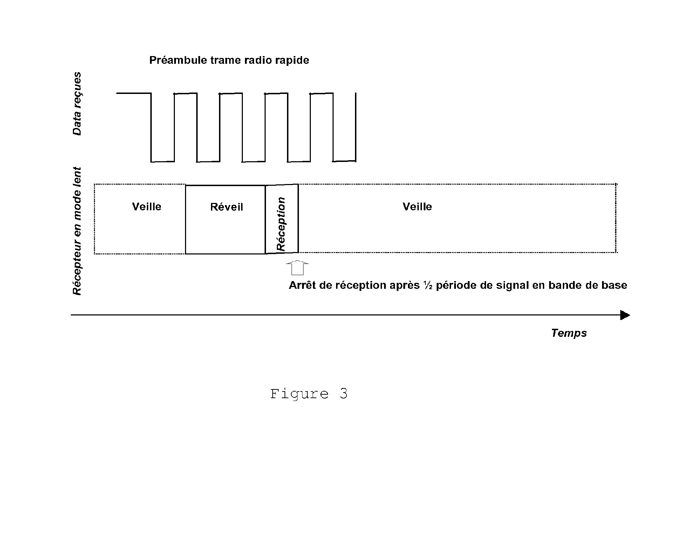

La figure 3 montre le traitement par un récepteur qui fonctionne en mode lent de données transmises via ledit canal de fréquence commun mais cette fois en mode rapide, avec un débit deux fois supérieur à celui qui est affecté aux données en mode lent dans le même canal commun. Dans ce cas, lors du réveil du récepteur, la détection du mode rapide est quasi immédiate, entraînant la mise en veille dudit récepteur.

L'invention permet de faire coexister des applications à des temps de réaction courts, c'est-à-dire fonctionnant en mode rapide, avec des applications qui fonctionnent avec des temps de réaction longs, c'est-à-dire en mode lent.

Cette coexistence s'effectue sans impact notable en termes de délai sur le mode rapide, et ni sur la durée de vie des piles ou batteries pour les dispositifs en réception en mode lent, ce qui constituait les deux problèmes essentiels identifiés auparavant.

## Revendications

1. Procédé de communication bidirectionnelle au sein d'un réseau radio de type domotique reliant une pluralité d'équipements communiquant en deux modes distincts, un premier mode dit rapide impliquant une communication réalisée sans qu'il y ait perception humaine d'un décalage entre une commande et sa réalisation si elle s'accompagne d'un effet perceptible et un second mode dit lent pour lequel ladite perception n'est pas un enjeu, **caractérisé en ce qu'**il est basé sur plusieurs canaux de fréquences de communications distinctes, comportant au moins un canal de fréquence prédéterminée pour les communications entre équipements fonctionnant en mode rapide, au moins un canal de fréquence prédéterminée pour les communications entre équipements fonctionnant en mode lent, au moins un canal de fréquences commun aux équipements fonctionnant en mode lent et aux équipements fonctionnant en mode rapide.

2. Procédé de communication bidirectionnelle au sein d'un réseau radio de type domotique selon la revendication précédente, **caractérisé en ce que**, dans chaque canal de fréquences commun, le codage des données est identique en mode rapide et en mode lent, les débits étant différents pour les deux modes.

3. Procédé de communication bidirectionnelle au sein d'un réseau radio de type domotique selon l'une des revendications précédentes, **caractérisé en ce qu'**au moins un canal commun de fréquence est réservé aux équipements fonctionnant en mode rapide communiquant avec des équipements fonctionnant en mode lent et **en ce qu'**au moins un canal commun de fréquence est réservé aux équipements fonctionnant en mode lent communiquant avec des équipements fonctionnant en mode rapide.
